# EUROPEAN PATENT APPLICATION

(11) **EP 1 254 849 A1**
(43) Date of publication of application: **06.11.2002**
(21) Application number: 01201572.3
(22) Date of filing: 01.05.2001
(51) Int. Cl.: B65D 77/20, B29C 45/14

(54) **Method for manufacturing a cover for a container**

(71) Applicant: Claes, François Charles, 3300 Tienen (BE)
(72) Inventor: Claes, François Charles, 3300 Tienen (BE)
(74) Representative: Donné, Eddy

(57) **Abstract**

This invention relates to a method for manufacturing a cover (1,2) for a container (10), according to which a membrane (2) is connected to a hollow ring (1) which is open over its entire length to receive an edge (11) of the container (10). The hollow open ring is transferred in an injection mould (9) wherein the membrane (2) is injection moulded in plastic material and with its outer edge on the inner side of the ring (1).

## Description

This invention relates to a method for manufacturing a cover for a container, according to which a membrane is connected to a hollow ring which is open over its entire length to receive an edge of the container.

Such covers, sometimes called "easy-peel" covers, are used for airtight sealing off cans or other containers in aluminium, tinned steel, cardboard or plastic.

In order to seal a container, the open ring is positioned on the edge of the container so that this edge enters the ring, after which the ring is deformed, mostly together with the edge of the container, so that the ring closely joins the edge, mostly through the intermediary of a sealing material covering the inside of the hollow ring.

In order to open the container, the membrane is torn away, while the ring remains on the edge of the container.

According to known methods, the membrane is made from aluminium and connected to the ring by means of hot sealing.

To permit this hot sealing, the ring has to be provided with a shoulder extending towards the centre of the ring for receiving the edge of the membrane.

Due to the necessity of the shoulder, the ring is manufactured by providing a flat round disc in which a central opening is stamped out. Thereafter the obtained flat ring is shaped into a ring with a U-shaped section and provided with the shoulder. The inner edge of the shoulder has to be rolled in a curve to avoid a sharp edge. The inner side of the open ring is covered with a sealing compound.

This method is expensive as the stamped out material is lost.

This shoulder also reduces the opening which becomes free after removing the membrane and renders the emptying of the container more difficult.

The aim of the invention is a more economical method for manufacturing, resulting in a cover permiting a maximal opening after removal of the membrane.

To this aim, the hollow open ring is transferred in an injection moulding machine wherein the membrane is injection moulded with plastic material and with its edge covering the inner side of the ring.

No shoulder is needed for connecting the membrane to the ring and the ring may be manufactured without shoulder. After removal of the membrane, the opening inside the ring is bigger, which makes it easier to empty the container.

The ring is preferably made with a U-shaped section, and thus without shoulder.

Moreover, a sealing compound on the inner side of the ring may be omitted, so the step of applying such compound may mostly be omitted.

The edge of the membrane covers therefore preferably practically completely the inner side of the ring.

The membrane may be provided with one or more tear strips.

Depending on the products packaged in the container and the desired protection by the cover, the membrane may be covered on one or both sides, at least partly with a protective membrane, for instance of barrier material, such as aluminium, which protective membrane may be co-injected with the plastic membrane.

The ring may be of metal and produced from a flat ring cut from an extruded pipe and shaped, or may be produced from two ring portions punched out from a flat sheet, welded together and shaped before or after welding.

If the ring is made of metal it may also be produced from one or more flat strips which are bent in a ring or in ring portions, the ends of the ring or the ring portions being welded together before or after being shaped.

The ring may also be of plastic material, in which case the ring is preferably also injection moulded.

To more clearly show the characteristics of the invention, a preferred embodiment of a method for manufacturing a cover for a container, is described in the following, as an example without any limiting character, with reference to the accompanying drawings, wherein:
Figure 1 shows a perspective view of a pipe used in a first step of the method of the invention;
Figure 2 shows a flat ring in a second step of the manufacturing of the ring used in the method of the invention;
Figure 3 shows the ring of figure 2 after shaping;
Figures 4 tot 6 show the ring of figure 3 during three steps of its manufacturing according to the invention but relating to another embodiment;
Figures 7 to 9 show the ring of figures 3 and 6 during three steps of its manufacturing, according to the invention but still relating to another embodiment;
Figure 10 shows the open injection mould during a following step of the method of the invention;
Figure 11 shows in perspective, a part of the obtained finished cover above a container;
Figure 12 shows, on a greater scale, the detail indicated by F12 in figure 11;
Figures 13 and 14 are perspective views, similar to the one of figure 11, but showing two successive steps of mounting the cover on the container.

For manufacturing a cover according to the invention, a shoulderless hollow and open ring 1 is first produced and a membrane 2 in synthetic plastic material is injection moulded on the ring 1.

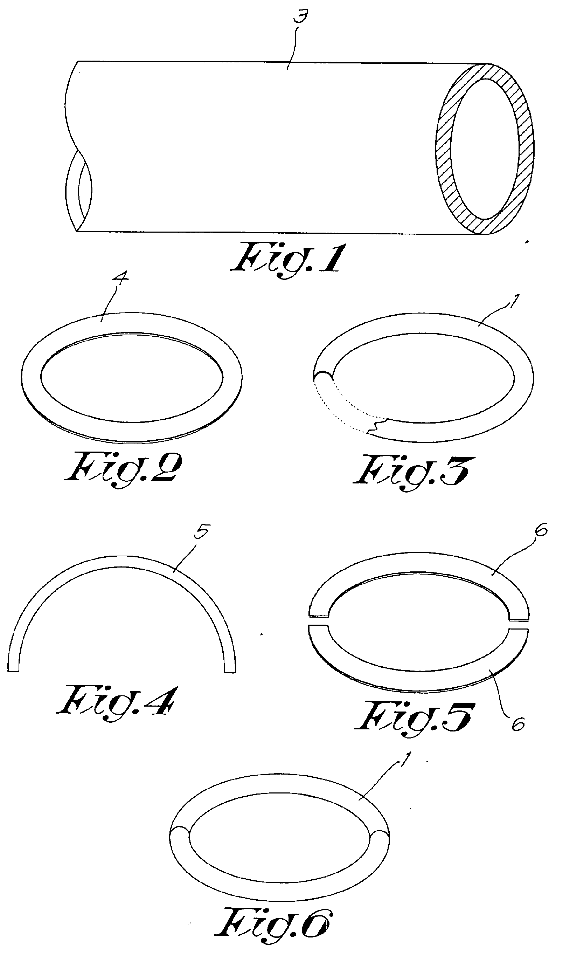

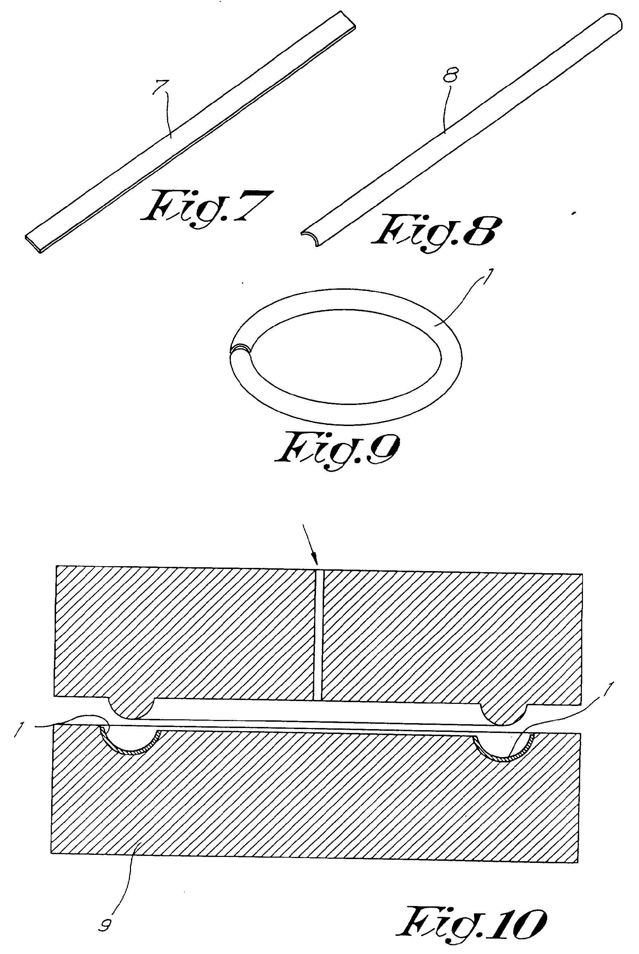

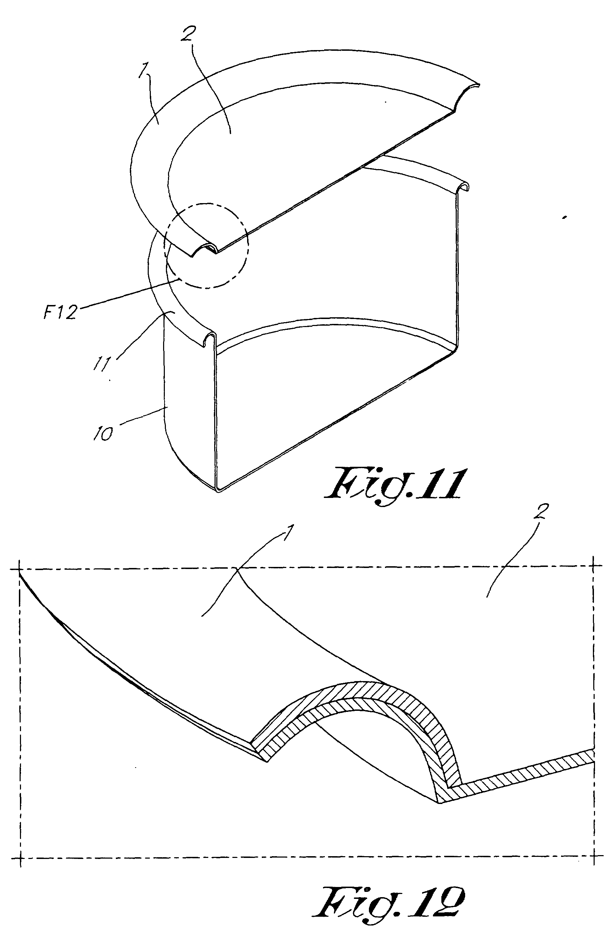

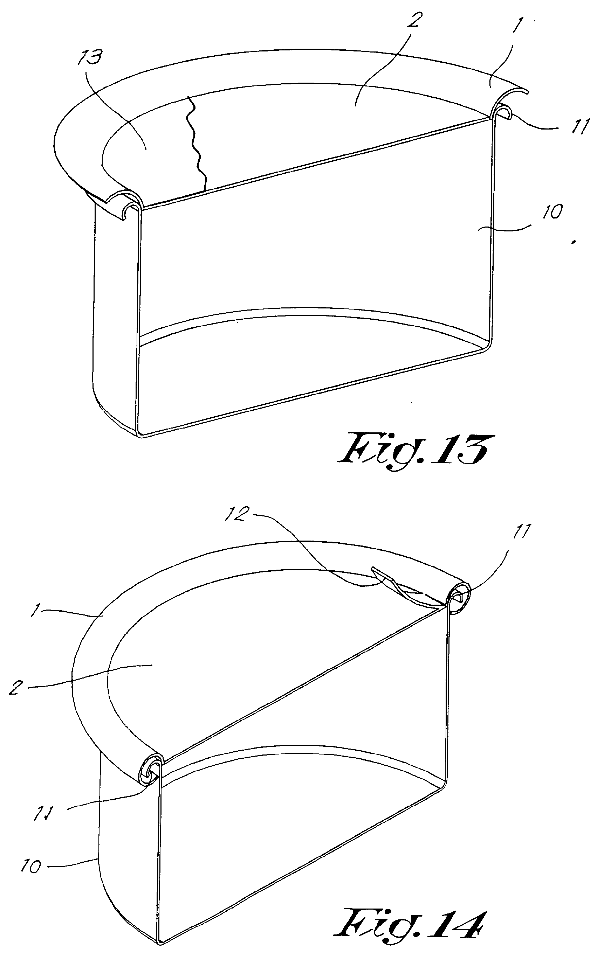

As shown in figure 1 an aluminium pipe 3 is extruded and a slice or flat ring 4 is cut from it. The flat ring 4, shown in figure 2, is thereafter shaped to have a U-shaped section as shown in figure 3.

According to another manner for manufacturing the ring 1, shown in figures 4 to 6, a small bent strip 5 having the shape of half of the above-mentioned flat ring 4, is punched out of a metal sheet, for example a sheet of aluminium or steel, and two such ring halves 6 as shown in figure 4, are welded together as shown in figure 5. Finally the obtained ring is put into shape to form the ring 1.

In variant, the two ring halves 6 may be shaped with a U-section before being welded together.

In another variant, the flat ring 4 may be punched as a whole out of a metal sheet, but this will result in a loss of sheet material.

Instead of punching flat ring halves 6 or complete flat rings from the metal sheet, a straight strip 7 may be punched. This strip 7, shown in figure 7, is consequently shaped in U-shape and the shaped strip 8, shown in figure 8, is bent into a ring as shown in figure 9. Finally the ends of the bent and shaped strip 8 are welded together to form the ring 1.

In a variant the strip 7 may first be bent and welded before being shaped in a U-profile.

In another variant, the strip 7 may constitute only half of the ring so that two such strips 7 which are bend into a half circle and are either or not shaped, are welded together.

For some applications, a lacquered ring 1 is preferred, for example for avoiding corrosion by air and or by the product.

In these cases the ring 1, made according to one of the above-mentioned embodiments, is lacquered by dumping it in a lacquering bath, by spray lacquering or by powder lacquering.

In the embodiments wherein a ring, a ring halve or a strip is first punched from a metal sheet, the metal sheet may already be lacquered.

In still another embodiment the ring 1 is not made of metal but of plastic, for example by injection moulding.

In all these embodiments a ring 1 is obtained which has a U-section and which is thus open on the bottom side over its entire length.

The pre-formed ring 1 produced in one of the above-mentioned manners, is, in a following step, transferred into an injection mould 9.

In figure 10, the mould 9 is shown in open position, with a ring 1 upside down in its lower portion.

After closing the mould 9, a plastic material is injected forming the membrane 2 which does not only close the central opening in the ring 1 but also covers the inner side of the ring 1 as shown in detail in figure 12.

Suitable plastics are polypropylene, polycarbonate, polyethylene, polyamide etc.

Figures 11, 13 and 14 show how the cover consisting of the ring 1 and the membrane 2, is mounted on a container 10, for instance a tin can, having at its open end an outwardly bent rounded edge 11.

The cover 1,2 is placed opposite the open end, as shown in figure 11, and the ring 1 is adjusted over the edge 11 as shown in figure 13.

The ring 1 containing the edge 11 inside it, is finally bent further and rolled together with the edge 11 so that its section is nearly a complete circle and the outer edge of the ring abuts against the container 10.

The closed container 10 is shown in figure 14. The outer edge of the plastic membrane 2 is pressed against the edge 11 so that a tight sealing is obtained. No additional sealing compound is necessary anymore, which avoids the step of applying such compound.

After removing the membrane 2 from the central opening of the ring 1, the contents of the container 10 are easily accessible as the opening is nearly as great as the open end of the container 10. As there is no shoulder, emptying the container 10 is easy.

In order to facilitate said removal of the membrane 2, the latter may be provided with one or more tear off strips 12 as shown in figure 14 and/or may be provided with tear lines where the material of the membrane 2 is thinner.

Depending on the application and the needed protection for the products packed inside the container 10, the membrane 2 may be covered on the inside and/or the outside with a protective membrane 13 of barrier material, for instance of aluminium.

In figure 13, a portion has been shown of such barrier membrane 13 on the outside of membrane 2, covering the central opening within the ring 1.

The membrane 2 or an outer barrier membrane 13 may be provided with a decoration and/or text.

## Claims

1. Method for manufacturing a cover (1,2) for a container (10), according to which a membrane (2) is connected to a hollow ring (1) which is open over its entire length to receive an edge (11) of the container (10), **characterised in that** the hollow open ring is transferred in an injection mould (9) wherein the membrane (2) is injection moulded in plastic material and with its outer edge on the inner side of the ring (1).

2. Method according to claim 1, **characterised in that** the ring (1) is made without a shoulder at the side of its central opening.

3. Method according to claim 2, **characterised in that** the ring (1) is made with a U-shaped section.

4. Method according to any of claims 1 to 3, **characterised in that** the edge of the membrane (2) covers practically completely the inner side of the ring (1).

5. Method according to any of the preceding claims, **characterised in that** the membrane (2) is provided with one or more tear strips (12).

6. Method according to any of the preceding claims, **characterised in that** the membrane (2) is covered on one or both sides, at least partly, with a protective membrane (13), for instance of barrier material, such as aluminium.

7. Method according to claim 6, **characterised in that** the protective membrane (13) is co-injected with the plastic membrane (2).

8. Method according to any of claims 1 to 7, **characterised in that** the ring (1) is made of metal and produced from a flat ring (4) cut from an extruded pipe (3) and shaped.

9. Method according to any of claims 1 to 7, **characterised in that** the ring (1) is made of metal and produced from two ring portions punched out from a flat sheet, welded together and shaped before or after welding

10. Method according to any of claims 1 to 7, **characterised in that** the ring (1) is made of metal and produced from one or more flat strips (8) which are bent in a ring or in ring portions, the ends of the ring or the ring portions being welded together before or after being shaped.

11. Method according to any of claims 1 to 7, **characterised in that** the ring (1) is made of plastic material, and injection moulded.
